# EUROPEAN PATENT APPLICATION

(11) **EP 1 898 385 A1**
(43) Date of publication of application: **12.03.2008**
(21) Application number: 06018755.6
(22) Date of filing: 07.09.2006
(51) Int. Cl.: G09F 15/00, F16B 7/14

(54) **Length adjustable pole display system**

(71) Applicant: Bixolon Co., Ltd., 705 Factory World 332-2 Wonchun-dong, Youngtong-ku Suwon, Kyungki-do (KR)
(72) Inventor: Kim, Jin Gwan, Kyungki-do (KR); Cho, Man Sik, Kyungki-dp (KR)
(74) Representative: Blaumeier, Jörg

(57) **Abstract**

The invention provides a length adjustable pole display system (100). The pole display system includes a display unit (110) for displaying information, a base (130) placed on a floor, and a pole unit (120) connecting between the display unit and the base. The pole unit includes an upper pole (120a) having an upper end attached to the display unit, a lower pole (120b) having a lower end attached to the base and an adjustment member (120c) meshed with an outer surface of the lower pole into which a lower end of the upper pole is inserted. The adjustment member tightens an upper inner surface of the lower pole against a lower outer surface of the upper pole when locked. The pole connecting between the display unit and the base can be adjusted in length freely and simply to flexibly vary the whole length of the pole display system, thereby improving user convenience.

## Description

### BACKGROUND OF THE INVENTION

### Field of the Invention

The present invention relates to an apparatus for adjusting the length of a pole display, and more particularly, a length adjustable pole display system in which a poll connecting between a display unit and a base can be adjusted in length freely and simply to flexibly vary the whole length of the pole display system, thereby improving user convenience.

### Description of the Related Art

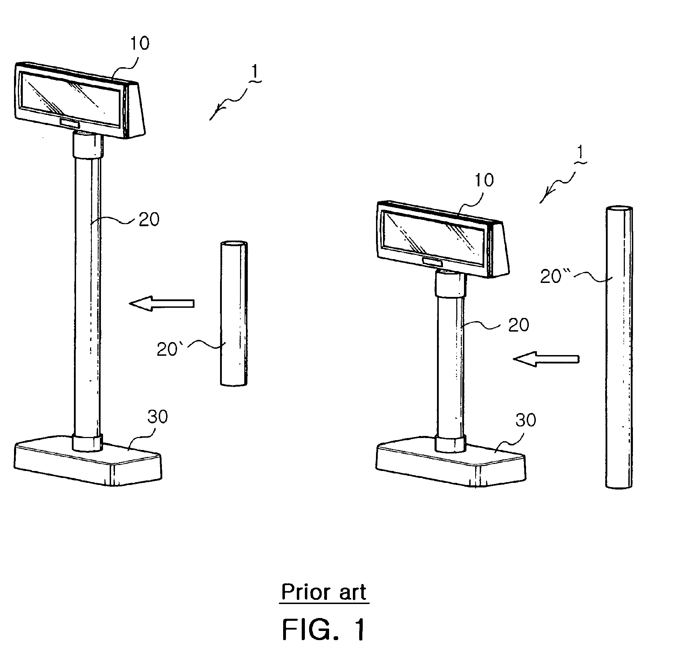

Referring to FIG. 1, a pole display system 1 generally includes a display unit 10 for displaying information such as numbers and texts in response to power application and information input. The display unit 10 is assembled to the top of a pole 20 of a predetermined length, in which power supply and communication cables (not shown) are installed. The pole 20 is assembled at the bottom to a base 30, which is supported on a floor and has a main board (not shown) electrically connected to the cables. The pole 20 is of a cylindrical structure made of metal or plastic, configured to house the cables.

In the meantime, the user of the display unit 10 has to change the displaying position according to its usage and the surrounding environment. However, the pole 20 is a one-piece member which is rarely adjustable in length. Accordingly, to vary the height of the display unit 10, poles 20' and 20" of different lengths have to be prepared in addition to the pole 20 so that one of the poles 20, 20' and 20" having a suitable length can be selectively used.

That is, as shown in FIG. 1, to lower the height of the pole display system 1, the pole 20 assembled between the display unit 10 and the base 30 is separated therefrom and replaced by the shorter pole 20'.

On the other hand, in case of raising the height of the pole display system 1, the pole 20 assembled between the display unit 10 and the base 30 is separated therefrom and replaced by the longer pole 20".

However, the user has to possess a plurality of the poles 20, 20' and 20" of different lengths to adjust the height of the conventional pole display system 1. Inconveniently, the maintenance of the pole display 1 is cumbersome and the height of the pole display system is not adjusted quickly.

### SUMMARY OF THE INVENTION

The present invention has been made to solve the foregoing problems of the prior art and therefore an object of certain embodiments of the present invention is to provide a length adjustable pole display system in which a poll connecting between a display unit and a base can be adjusted in length freely and simply to flexibly vary the whole length of the pole display system, thereby improving user convenience.

According to an aspect of the invention for realizing the object, there is provided a pole display system. The pole display system includes a display unit for displaying information, a base placed on a floor, and a pole unit connecting between the display unit and the base, wherein the pole unit comprises an upper pole having an upper end attached to the display unit, a lower pole having a lower end attached to the base and an adjustment member meshed with an outer surface of the lower pole into which a lower end of the upper pole is inserted, the adjustment member tightening an upper inner surface of the lower pole against a lower outer surface of the upper pole when locked.

Preferably, the upper pole has a plurality of upper elastic flaps at the lower end thereof, formed by a plurality of slits extending in a longitudinal direction of the upper pole.

Preferably, the lower pole has a plurality of lower elastic flaps at the upper end thereof, formed by a plurality of slits extending in a longitudinal direction of the lower pole.

Preferably, the lower pole has a male thread formed on the upper outer surface thereof, and the adjustment member has a female thread formed on an inner surface thereof, the female thread of the adjustment member meshing with the male thread of the lower pole.

Preferably, the lower pole has an inner contact protruding from the upper inner surface thereof toward an outer surface of the upper pole.

More preferably, the inner contact comprises a plurality of ribs protruded inward and extending in a longitudinal direction of the lower pole.

Alternatively, the inner contact comprises at least one inward embossment extending in a longitudinal direction of the lower pole.

Preferably, the upper pole has at least one damper protruded from the outer surface thereof to contact an inner surface of the lower pole, thereby decelerating dropping of the upper pole.

More preferably, the damper comprises at least one outward embossment arranged in a longitudinal direction of the upper pole.

Alternatively, the damper comprises a rib protruding outward and extending in a longitudinal direction of the upper pole.

Preferably, the adjustment member has a tapered slope at an upper end thereof corresponding to the upper end of the lower pole, the tapered slope having an outside diameter gradually narrowing to a top.

### BRIEF DESCRIPTION OF THE DRAWINGS

The above and other objects, features and other advantages of the present invention will be more clearly understood from the following detailed description taken in conjunction with the accompanying drawings, in which:

FIG. 1 is a perspective illustrating a conventional pole display;

FIG. 2 is a longitudinal cross-sectional view illustrating a length adjustable pole display of the invention;

FIG. 3 is a perspective fragmentary cross-sectional view illustrating a pole unit of the length adjustable pole display of the invention;

FIG. 4 is an exploded perspective view illustrating the pole unit of the length adjustable pole display of the invention;

FIG. 5 is a longitudinal cross-sectional view illustrating the operation a drop damper of the length adjustable pole display of the invention; and

FIGS. 6a and 6b are perspective views illustrating the usage of the length adjustable pole display of the invention.

### DETAILED DESCRIPTION OF THE PREFERRED EMBODIMENT

The present invention will now be described more fully hereinafter with reference to the accompanying drawings, in which preferred embodiments of the invention are shown.

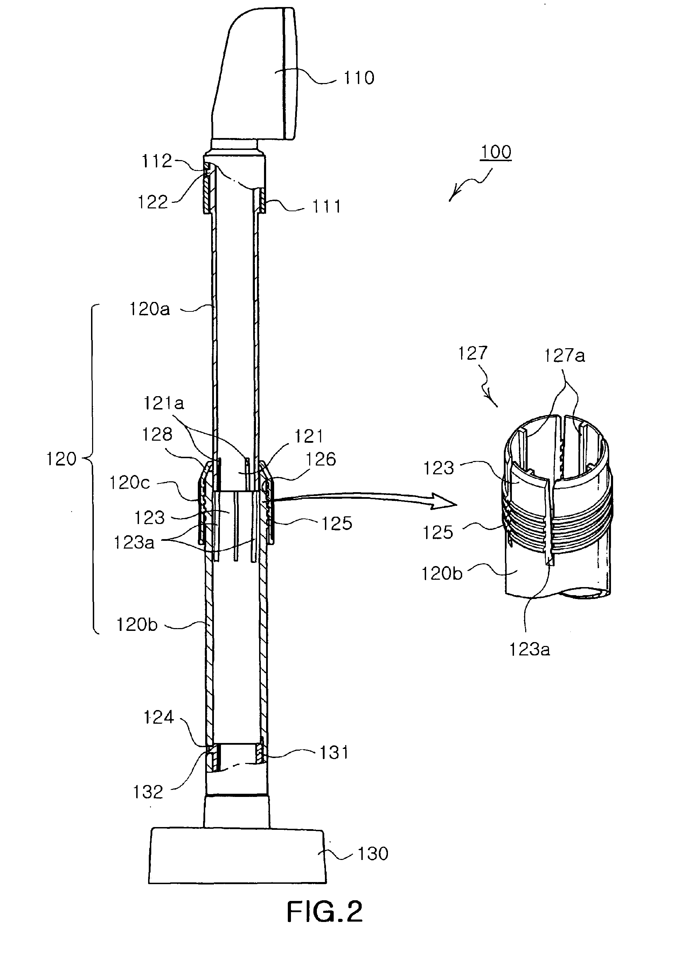

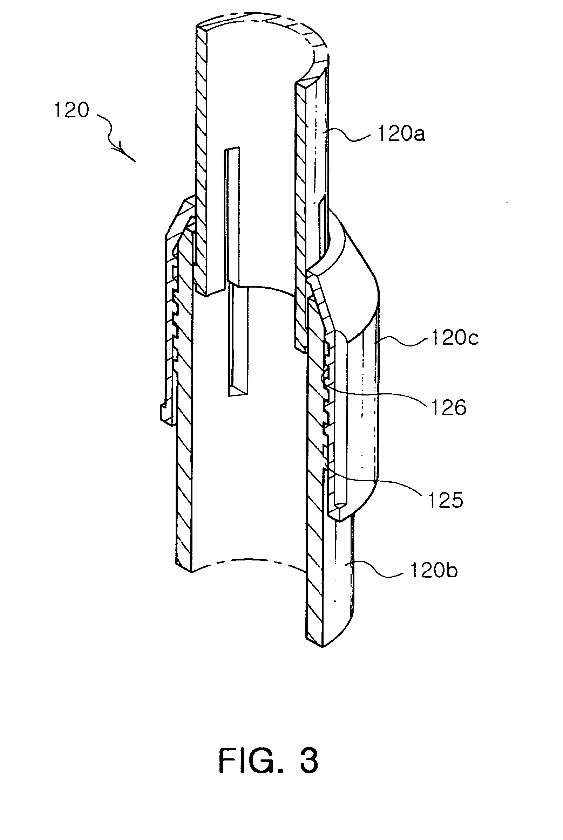

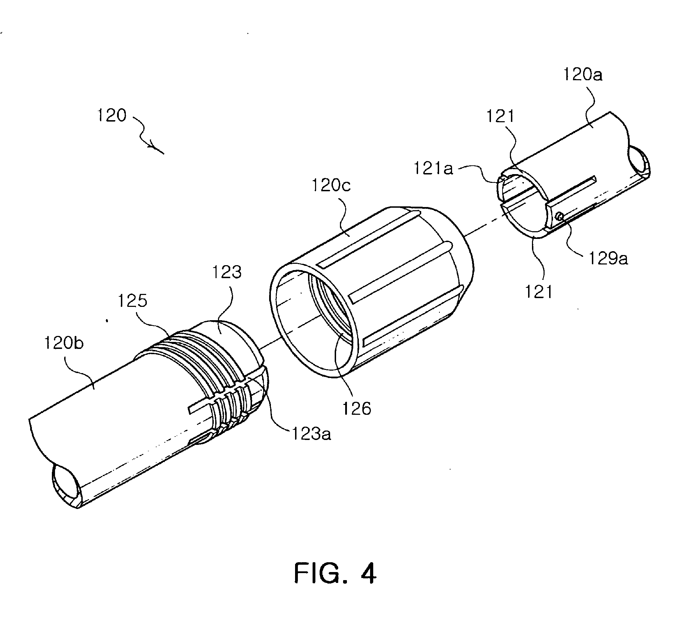

FIG. 2 is a longitudinal cross-sectional view illustrating a length adjustable pole display system 100 of the invention, FIG. 3 is a perspective fragmentary cross-sectional view illustrating a pole unit 120 of the length adjustable pole display system 100 of the invention, and FIG. 4 is an exploded perspective view illustrating the pole unit 120 of the length adjustable pole display system 100 of the invention.

Referring to FIGS. 2 to 4, the pole display system 100 of the invention includes a display unit 110 for displaying information, the pole unit 120 mounting the display unit 110 on the top thereof and a base 130 seated on the floor and supporting the pole unit 120. The pole unit 120 is configured adjustable in length according to the usage of the user, and includes an upper pole 120a, a lower pole 120b and an adjustment member 120c.

The upper pole 120a is a hollow pipe member of a specific length, to the top end of which the display unit 110 is attached to display information such as texts and numbers to the outside.

The upper pole 120a has a coupling protrusion 122 on the outer surface of a top portion thereof. The coupling protrusion 122 is configured to be elastically inserted into a coupling hole 112 of a connector 111 of the display unit 110.

The upper pole 120a also has a plurality of upper elastic flaps 121 formed at the lower end thereof, which are divided from each other via a plurality of slits 121a extending for a specific dimension along the length of the upper pole 120a. The upper elastic flaps 121 are preferably arranged along the circumferential direction of the upper pole 120a, spaced from each other with a specific gap.

The upper elastic flaps 121 on the upper outer surface have an elastic restoring force to be flexed radially under a radial external force and return to the original position when the external force is removed.

The lower pole 120b is a hollow pipe member, which is attached at the lower end attached to the base 130, which is placed on the floor 130, and at the upper end coupled with the lower end of the upper pole 120b. The lower pole 120b has an inside diameter larger than an outside diameter of the upper pole 120b.

The base 130 has a connector 131 extending upward therefrom and a coupling protrusion 132 projected outward from the connector 131. The protrusion 132 is elastically inserted into the lower end of the lower pole 120b.

Likewise to the upper pole 120a, the lower pole 120b has a plurality of lower elastic flaps 123 formed at the upper end thereof. The elastic flaps 123 are formed in are divided from each other via a plurality of slits 123a extending for a specific dimension along the length of the lower pole 120b. The lower elastic flaps 123 are preferably arranged along the circumferential direction of the lower pole 120b, spaced from each other with a specific gap.

Likewise to the upper elastic flaps 121, the lower elastic flaps 123 on the upper outer surface of the lower pole 120b has an elastic restoring force to be flexed inward under an external force and return to the original position when the external force is removed.

In addition, the lower pole 120b has an inner contact 127 protruded to the outer surface of the upper pole 120a at a predetermined dimension. When an upper inner surface of the lower pole 120b including the lower elastic flaps 123 is deformed elastically and inwardly, the inner contact 127 can locally contact an upper outer surface of the upper pole 120a, thereby generating a tightening force while producing a quick tightening response.

The inner contact 127 include a plurality of inward ribs 127a which are protruded inward from the inner surface of the lower pole 120b and extended in a longitudinal direction of the lower pole 120b as shown in FIG. 2. However, the inner contact of the invention is not limited thereto but may include at least one inward embossment extending in a longitudinal direction of the lower pole 120b.

Here, the inner contact 127 in the form of the inward ribs 127a or the inward embossment may be preferably arranged on a lateral center of the inner surface of the lower elastic flaps 123.

The lower pole 120b also has a male thread 125 formed on the upper outer surface thereof, which is adapted to mesh with the adjustment member 120c.

In the meantime, the adjustment member 120c is a hollow pipe member of a specific length, which has a female thread formed on the inner surface thereof. The female thread is adapted to mesh with the male thread 125 on the upper outer surface of the lower pole 120b.

Accordingly, when the adjustment member 120c is rotated to be locked, the upper end of the lower pole 120b including the lower elastic flaps 123 is deformed elastically and radially so that the inner contact 127 on the inner surface of the lower pole 120b is forced to contact the outer surface of the upper pole 120a.

As a result, a specific amount of tightening force is generated in a region where the lower inner surface of the upper pole 120a overlaps the upper inner surface of the lower pole 120b so that the upper pole 120a inserted into the lower pole 120b does not drop anymore under the weight thereof.

The adjustment member 120c preferably has a tapered slope 128 at the upper end thereof corresponding to the upper end of the lower pole 120b. The tapered slope 128 has an outside diameter gradually narrowing to a top.

Accordingly, when the adjustment member 120c is rotated to be locked, the upper slope 128 contacts the upper end of the lower pole 120b, pressing the lower flaps 123 of the lower pole 120b radially and thus deforming the lower flaps 123 elastically. This as a result, tight locking can be carried out more easily through the contact between the inner contact 127 on the inner surface of the lower pole 120b and the outer surface of the upper pole 120a.

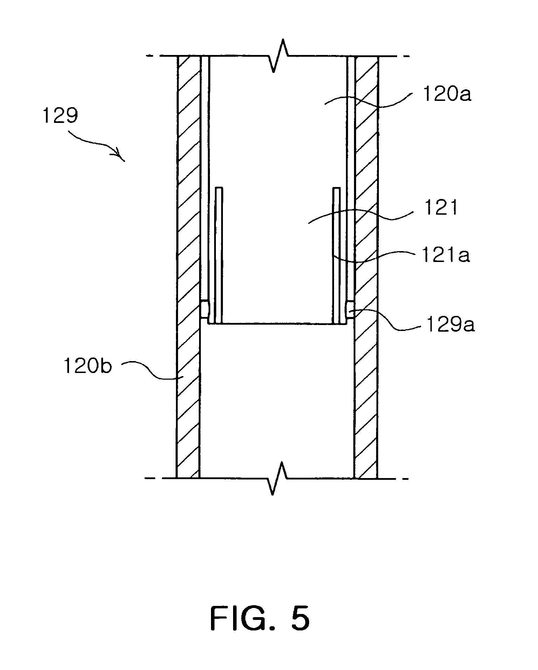

As shown in FIGS. 4 and 5, the upper pole 120a has at least one damper 129 protruded from the outer surface thereof to contact the inner surface of the lower pole 120b, thereby decelerating dropping of the upper pole 120a.

When the adjustment member 120c is rotated to be unlocked and thus the tightening force between the upper and lower poles 120a and 120b is removed, the damper 129 decelerates the speed of the upper pole 120a so as not drop rapidly under the weight. This as a result can prevent any damages owing to collision.

Even in a case where the tightening force between the upper and lower poles 120a and 120b is removed, the damper 129 protruded from the lower outer surface of the upper pole 120a maintains contact with the outer surface of the lower pole 120b. This generates a frictional force against the dropping of the upper pole 120a under the weight, thereby decelerating or preventing rapid dropping of the upper pole 120a.

As shown in FIGS. 4 and 5, the damper 129 includes outward embossments 129a (or at least one embossment) arranged on the outer surface of the upper pole 120a in the longitudinal direction thereof. However, the invention is not limited thereto but the damper 129 may be provided in other forms such as a rib which is protruded outward and extended in the longitudinal direction of the upper pole 120a.

Here, the damper 129 in the form of the outward embossment 129a or the outward ribs is preferably arranged on a lateral center of the outer surface of the upper elastic flaps.

Furthermore, a wrinkled portion may preferably be formed on the outer surface of the adjustment member 120c so that the user can easily handle the adjustment member 120c or easily rotate the same for locking/unlocking.

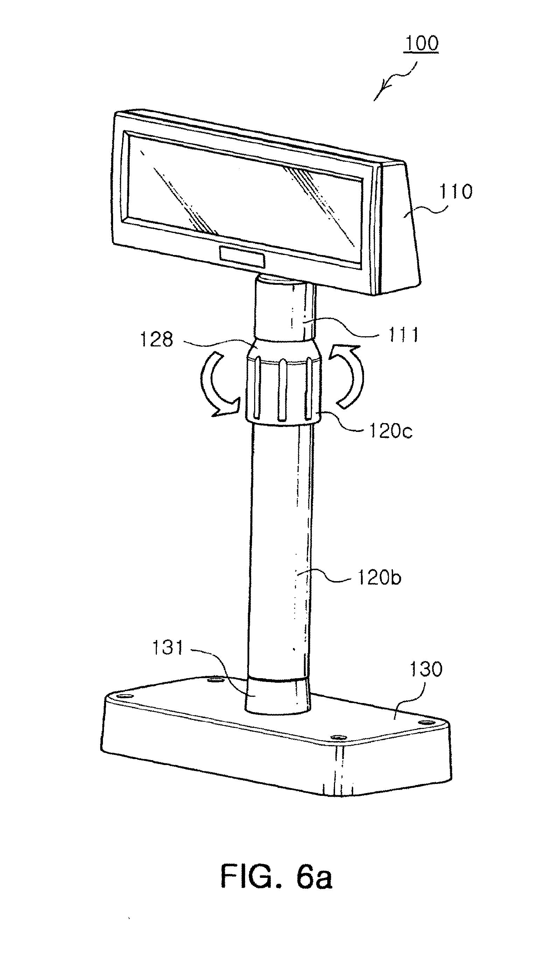

In the pole display system 100 having the above-described construction, when the user rotates the adjustment member 120c of the pole unit 120 provided between the display unit 110 and the base 130 in a counterclockwise direction as shown in FIG. 6a in order to adjust the height of the display unit 110 for displaying information, the adjustment member 120c is screwed upward since it is meshed with the male thread 125 of the lower pole 120b as shown in FIGS. 2 and 3.

Then, the tight contact between the lower elastic flaps 123 slit at the upper outer surface of the lower pole 120b and the outer surface of the upper pole 120a is canceled, and thus the upper pole 120a is liberated from the lower pole 120a.

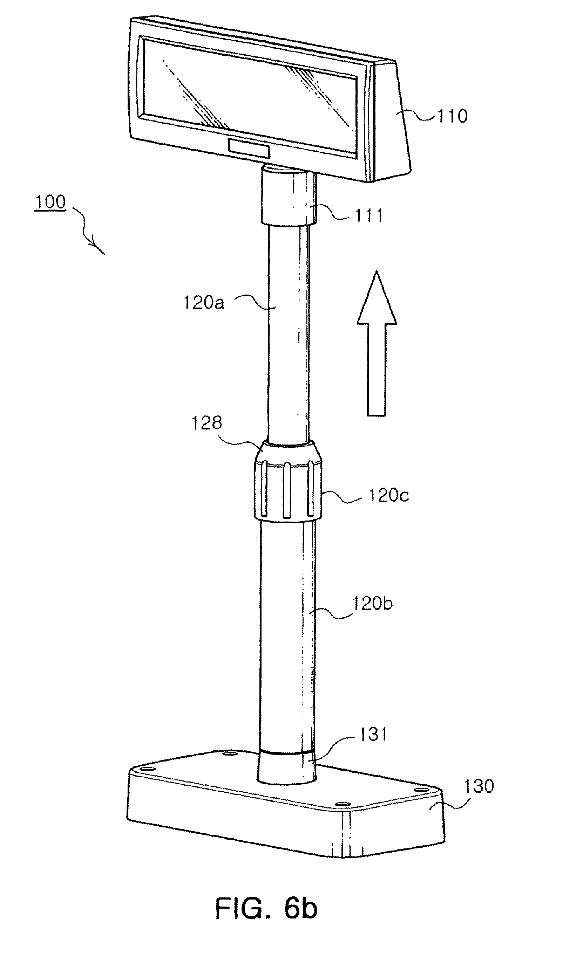

Accordingly, the user can move the upper pole 120a directly upward to enhance the installation height of the display unit 110 as shown in FIG. 6b.

When the height of the display unit 110 is determined, the user rotates the adjustment member 120c reversely in a locking direction. Then, the adjustment member 120c is screwed downward so that the slope 128 radially presses the lower elastic flaps 123 at the upper outer surface of the lower pole 120b.

Then, the lower elastic flaps 123 are pressed toward the outer surface of the upper pole 120a, and at the same time, the inner contact 127 on the inner surface of the lower flaps 123 contacts the outer surface of the upper pole 120a, such that the upper pole 120a is securely fixed without dropping.

According to the present invention as set forth above, the pole unit connecting between the display unit for displaying information and the base supported on the floor includes the lower pole, the upper pole inserted into the lower pole and the adjustment member for generating a tightening force between the upper and lower poles. The locking/unlocking rotation of the adjustment member makes it possible to freely and simply adjust the vertical length of the pole unit on the top of which the display unit is mounted. The whole height of the pole display system can be flexibly adjusted according to the usage of the user, thereby improving user convenience remarkably over the prior art. Furthermore, since it is unnecessary to manage various lengths of poles, maintenance cost can be saved, thereby affording price competitiveness as an advantageous effect.

While the present invention has been described with reference to the particular illustrative embodiments and the accompanying drawings, it is not to be limited thereto but will be defined by the appended claims. It is to be appreciated that those skilled in the art can substitute, change or modify the embodiments into various forms without departing from the scope and spirit of the present invention.

## Claims

1. A pole display system comprising:
a display unit for displaying information;
a base placed on a floor; and
a pole unit connecting between the display unit and the base, wherein the pole unit comprises an upper pole having an upper end attached to the display unit, a lower pole having a lower end attached to the base and an adjustment member meshed with an outer surface of the lower pole into which a lower end of the upper pole is inserted, the adjustment member tightening an upper inner surface of the lower pole against a lower outer surface of the upper pole when locked.

2. The pole display system according to claim 1, wherein the upper pole has a plurality of upper elastic flaps at the lower end thereof, formed by a plurality of slits extending in a longitudinal direction of the upper pole.

3. The pole display system according to claim 1, wherein the lower pole has a plurality of lower elastic flaps at the upper end thereof, formed by a plurality of slits extending in a longitudinal direction of the lower pole.

4. The pole display system according to claim 1, wherein the lower pole has a male thread formed on the upper outer surface thereof, and the adjustment member has a female thread formed on an inner surface thereof, the female thread of the adjustment member meshing with the male thread of the lower pole.

5. The pole display system according to claim 1, wherein the lower pole has an inner contact protruding from the upper inner surface thereof toward an outer surface of the upper pole.

6. The pole display system according to claim 5, wherein the inner contact comprises a plurality of ribs protruded inward and extending in a longitudinal direction of the lower pole.

7. The pole display system according to claim 5, wherein the inner contact comprises at least one inward embossment extending in a longitudinal direction of the lower pole.

8. The pole display system according to claim 1, wherein the upper pole has at least one damper protruded from the outer surface thereof to contact an inner surface of the lower pole, thereby decelerating dropping of the upper pole.

9. The pole display system according to claim 8, wherein the damper comprises at least one outward embossment arranged in a longitudinal direction of the upper pole.

10. The pole display system according to claim 8, wherein the damper comprises a rib protruding outward and extending in a longitudinal direction of the upper pole.

11. The pole display system according to claim 1, wherein the adjustment member has a tapered slope at an upper end thereof corresponding to the upper end of the lower pole, the tapered slope having an outside diameter gradually narrowing to a top.
